# EUROPEAN PATENT SPECIFICATION

(11) **EP 2 792 534 B1**
(45) Date of publication and mention of the grant of the patent: **11.05.2016**
(21) Application number: 14161093.1
(22) Date of filing: 21.03.2014
(51) Int. Cl.: B60L 11/00, H01M 4/131, H01M 4/133, H01M 4/136, H01M 4/52, H01M 4/58, H01M 4/587, H01M 10/0525, H01M 10/06, H01M 10/44, H02J 7/14, B60L 11/14, B60L 11/18, H01M 16/00, H02J 7/00

(54) **Dual battery pack and operating method thereof**
Doppelbatteriepack und Betriebsverfahren dafür
Bloc-batterie double et son procédé de fonctionnement

(30) Priority: 19.04.2013 KR 20130043753
(43) Date of publication of application: 22.10.2014
(73) Proprietor: Samsung SDI Co., Ltd., Yongin-si, Gyeonggi-do (KR)
(72) Inventor: Song, Eui-Hwan, Yongin-si, Gyeonggi-do (KR); Lim, Ji-Hong, Yongin-si, Gyeonggi-do (KR); Woo, Seok-Gyun, Yongin-si, Gyeonggi-do (KR); Rheu, Woon-Sun, Yongin-si, Gyeonggi-do (KR); Gu, Jae-Sung, Yongin-si, Gyeonggi-do (KR)
(74) Representative: Gulde & Partner

(56) References cited:
- EP-A1- 2 538 484
- DE-A1-102011 054 158

## Description

### FIELD OF THE INVENTION

An exemplary embodiment of the present invention relates to a battery system having a multi battery pack and a method for operating the vehicle battery system.

### DESCRIPTION OF THE RELATED ART

Battery systems are disclosed e.g. in DE 10 2011 054 158 A1 and EP 2 538 484 A1. A vehicle including a conventional dual pack supplies power to a lithium-ion battery pack using a power conversion device including a switch in a regenerative braking stage. One of the dual pack may be a lithium-ion battery pack and the other may be a lead battery pack.

Power generated in the regenerative braking stage and a part of power generated by an alternator may be stored in one of the dual pack. In this case, the vehicle supplies power to the lithium-ion battery pack or the lead battery pack using the power conversion device including a switch.

When the lithium-ion battery pack is charged and a state of charge (SOC) of the lithium-ion battery pack is higher than a predetermined level, the switch of the power conversion device is turned off and the lithium-ion battery pack is connected to an electric load to supply power thereto.

As described, when a switch is used for power supply, a switching loss may occur and fuel efficiency improvement of the vehicle is deteriorated.

In addition, the conventional lithium-ion battery pack has a limited operation voltage range and the limited operation voltage range may block regenerative charging. That is, the switch is forcibly turned off. This may cause damage to the switch, and accordingly power loss and heat generation may occur.

Further, since the switch operation cannot be controlled while the vehicle is a parking state, energy stored in the lithium-ion battery pack cannot be used.

### SUMMARY OF THE INVENTION

The present invention has been made in an effort to provide a battery system according to claim 1, having a multi battery pack including at least two battery packs connected in parallel without having a power conversion device that includes a switch and an operation method of the vehicle battery system.

A battery system having a multi battery system according to the present invention includes: a first battery pack comprising a plurality of first battery cells being lithium-ion battery cells and having a positive electrode and a negative electrode, and a second battery pack having a larger capacity than the first battery pack and being a different type of battery pack than the first battery pack. The first and second battery packs are connected in parallel with an alternator for charging and discharging of the first and second battery packs, and the negative electrode of each of the lithium-ion battery cells comprises a carbon-based material excluding graphite and having an interlayer spacing (d₀₀₂) along a plane labeled by the miller indices in the range of 0.34 nm to 0.5 nm in X-ray measurements using Cu Kα line, wherein the operation voltage range of each of the first battery cells comprises an enhanced voltage range below 2V for cranking of a vehicle at a cold temperature.

The second battery pack preferably has a larger internal resistance than the first battery pack. Additionally or alternatively, the second battery pack is a lead battery pack.

Preferably, the carbon-based material is a graphitizing carbon, soft carbon, hard carbon, mesophase pitch-based carbide, or calcined cokes.

The interlayer spacing of the carbon-based material may range from 0.34 nm to 0.45 nm, preferably from 0.34 to 0.37 nm.

The average diameter D50 of the carbon-based material may range from 1 µm to 50 µm, preferably from 1 µm to 30 µm, more preferably from 5 µm to 15 µm.

The carbon-based material may have a specific surface area of 0.1 to 20 m²/g, preferably 1 to 10 m²/g, even more preferably 1 to 5 m²/g measured by the Brunauer-Emmett-Teller (BET) method.

The tap density of the carbon-based material may range from 0.3 to 10 g/cm³, preferably from 0.6 to 5 g/cm³.

A length of an electronic path from the first battery pack to the alternator is preferably shorter than the length of the electronic path from the second battery pack to the alternator.

The operation voltage range of each of the first battery cells comprises an enhanced voltage range below 2V for cranking of a vehicle at a cold temperature.

In one embodiment, the positive electrode of each of the first battery cells comprises a nickel-based positive electrode active material. The operation voltage range of each of the first battery cells in this case comprises a first enhanced range including 1.5V to 2V; a first normal range including 2.0V to 4.2V; and a first over-charging range including 4.2V to 4.5V.

In another embodiment, the positive electrode of each of the first battery cells comprises a lithium-phosphate-based positive electrode active material. In this case, the operation voltage range of the first battery cell comprises a second normal range including 1.75V to 3.8V; and a second over-charging range including 3.8V to 4.5V.

Further provided is a vehicle comprising a battery system according to the invention, wherein the alternator is configured to generate power to the battery system.

Additionally, an operation method of a vehicle is disclosed, the vehicle comprising an inventive battery system and the method comprises the step of charging the battery system via a direct electric connection from the alternator to the first and the second battery pack, respectively, such that the first battery pack and second battery pack are charged in parallel and the first battery pack is charged faster than the second battery pack.

An operation method of a vehicle battery system having a multi battery pack according to another feature of the present invention may be applied to a multi battery pack connected in parallel with an alternator, a starter, and a load of a vehicle. The operation method of the vehicle battery system includes: supplying power to the starter from the multi battery pack when the vehicle is in a cranking operation state; supplying power to the load from one of the alternator and the multi battery pack when the vehicle is in a driving state; and supplying power required for the vehicle from the multi battery pack when the vehicle is not operated, that is, in a parking state.

The multi battery pack includes a first battery pack and a second battery pack, and the first battery pack includes a plurality of first battery cells connected in series, a negative electrode of each of the first battery cells comprises a negative electrode active material, and the negative electrode active material comprises a carbon-based material of which interlayer spacing of a (002) plane is 0.34nm to 0.50nm in X-ray diffraction measurement using CuKα.

The supplying the power to the load in the driving state of the vehicle may include supplying output power of the alternator to the load when the output power of the alternator is higher than reference power and supplying power required for the load from the multi battery pack when the output power of the alternator is lower than the reference power.

When output power of the alternator is higher than reference power, the operation method of the vehicle battery system may further include charging the multi battery pack with power other than power required for the load among the output power of the alternator.

When the multi battery pack is charged with the power other than the power required for the load, a charging speed of the first battery pack may be faster than a charging speed of the second battery pack.

When the power required for the parked vehicle is supplied from the multi battery pack, a discharging speed of the first battery pack may be faster than a discharging speed of the second battery pack.

Other details of exemplary embodiments of the present invention are included in the detailed description.

The multi battery pack according to the exemplary embodiment of the present invention can be charged by an alternator and supply power to a load without having an additional power conversion means or a power control means.

The operation voltage range of the lithium-ion battery cell according to the exemplary embodiment of the present invention may cover the entire voltage ranges generated from a vehicle.

### BRIEF DESCRIPTION OF THE DRAWINGS

FIG. 1 shows a vehicle battery system provided with a multi battery pack according to an exemplary embodiment of the present invention.
FIG. 2 shows an operation voltage range of a lithium-ion battery cell and a voltage range generated in a vehicle according to an exemplary embodiment of the present invention.
FIG. 3 shows an operation voltage range of a lithium-ion battery cell and a voltage range generated in a vehicle according to an exemplary embodiment of the present invention.
FIG. 4 is an exploded perspective view of a lithium secondary battery according to an exemplary embodiment of the present invention.
FIG. 5 shows a lithium-ion battery pack according to the exemplary embodiment of the present invention.
FIG. 6 is a current flow of a multi battery pack in a cranking operation of a vehicle.
FIG. 7 exemplarily shows output power of an alternator during driving of the vehicle.
FIG. 8 is a graph illustrating a charging characteristic of the lithium-ion battery pack and the lead battery pack according to the exemplary embodiment of the present invention.
FIG. 9 is a graph illustrating a discharging characteristic of the lithium-ion battery pack and the lead battery pack according to the exemplary embodiment of the present invention.

### DETAILED DESCRIPTION OF THE EMBODIMENTS

Throughout this specification and the claims that follow, when it is described that an element is "coupled" to another element, the element may be "directly coupled" to the other element or "electrically coupled" to the other element through a third element. In addition, unless explicitly described to the contrary, the word "comprise" and variations such as "comprises" or "comprising", will be understood to imply the inclusion of stated elements but not the exclusion of any other elements.

Hereinafter, a multi battery pack according to an exemplary embodiment of the present invention will be described with reference to the accompanying drawing.

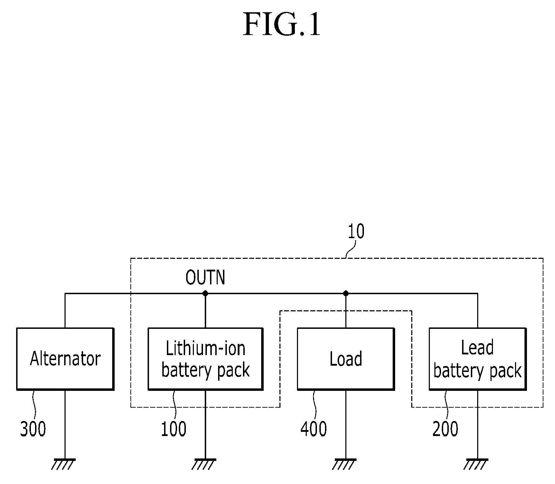

FIG. 1 shows a vehicle battery system provided with a multi battery pack according to an exemplary embodiment of the present invention.

In FIG. 1, a multi battery pack 10 includes a lithium-ion battery pack 100 and a lead battery pack 200. The lithium-ion battery pack 100 and the lead battery pack 200 are connected in parallel with the load 400 and the alternator 300, respectively, and the lithium-ion battery pack 100, the lead battery pack 200, the load 400, and the alternator 300 are connected in parallel with each other. FIG. 1 illustrates a single lithium-ion battery pack 100 and a single lead battery pack 200, but the exemplary embodiment of the present invention is not limited thereto. The multi battery pack 10 may include at least one lithium-ion battery pack and at least one lead battery pack.

The alternator 300 generates power and supplies the power to the load 400 or charges the multi battery pack 10.

The load 400 includes various types of loads provided in a vehicle (not shown). As an electric load, the load 400 supplies power from at least one of the alternator 300 and the multi battery pack 10.

For example, the lead battery pack 200 may have capacity of 60-100Ah and the lithium-ion battery pack 100 may have capacity of 4-20Ah. Since internal resistance of the lithium-ion battery pack 100 is significantly low compared to the lead battery pack 200, initial power required for the load 400 is supplied from the lithium-ion battery pack 100. However, when the load 400 continuously consumes power, power may be supplied from the lead battery pack 200.

As shown in FIG. 1, the multi battery pack 10, the alternator 300, and the load 400 are connected in parallel between an output node OUTN and a ground.

The lithium-ion battery pack 100 includes a plurality of lithium-ion battery cells coupled in series, and each of the lithium-ion battery cells includes a negative electrode formed of amorphous carbon, preferably a low-crystalline carbon and a positive electrode formed of a nickel (Ni)-based material or lithium iron phosphate (LFP)-based material.

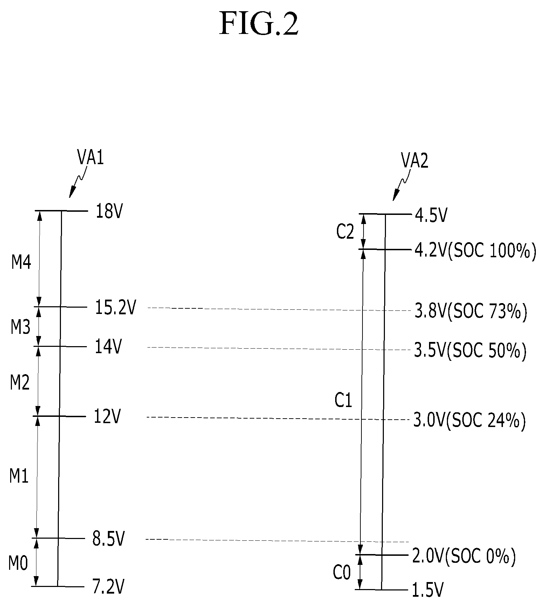

FIG. 2 shows an operation voltage range of the lithium-ion battery cell and a voltage range generated from a vehicle according to the exemplary embodiment of the present invention.

The operation voltage range shown in FIG. 2 is an operation voltage range of a lithium-ion battery cell using a negative electrode formed of amorphous carbon and nickel-based positive electrode. Hereinafter, the voltage range generated in the vehicle is referred to as VA1 and the operation voltage range of the lithium-ion battery cell using the nickel-based positive electrode is referred to as VA2.

In further detail, VA1 includes five conditions, and the entire range from 7.2V to 18V is classified depending on the five conditions.

First, a cold cranking range M0 is from 7.2V to 8.5V, and is a voltage range generated when an engine is started at a cold temperature. A cranking range M1 is from 8.5V to 12V, and is a voltage range generated at engine start.

A normal voltage range M2 is from 12V to 14V, and is a voltage range generated in a condition that no additional charging is occurred. For example, the condition that no additional charging is occurred is a condition that the multi battery pack 10 is not charged by the alternator.

A charging voltage range M3 is from 14V to 15.2V, and is a voltage range generated during a charging condition. For example, the charging voltage range M3 is a voltage range when a charging operation of the alternator 300 is performed.

In addition, an over-voltage range M4 is from 15.2V to 18V, and is a voltage range generated in an abnormal condition. For example, the abnormal condition includes a state that the alternator 300 or a regulator (not shown) malfunctions.

Subsequently, VA2 includes three conditions, and the entire range from 1.5V to 4.5V is classified depending on the three conditions.

An enhanced range C0 is from 1.5V to 2V, and is a range restrictively used for several minutes to several seconds for cranking of a vehicle engine at a cold temperature.

A normal range C1 is from 2.0V to 4.2V, and is a range from SOC 0% to SOC 100%.

An overcharge range C2 is from 4.2V to 4.5V, and is a range exceeding SOC 100%.

In FIG. 2, each range of VA1 corresponds to VA2. In FIG. 2, VA1 and VA2 correspond to each other when the lithium-ion battery pack 100 is formed of four lithium-ion battery cells connected in series. Since lithium-ion battery pack 100 is formed of four cells connected in series, a value obtained by dividing each voltage of VA1 by 4 becomes a voltage corresponds to a single lithium-ion battery cell. That means, the number of battery cells can differ from four battery cells depending on the voltage VA1.

First, the cold cranking range M0 corresponds to the enhanced range C0 and a part of the normal range C1, the cranking range M1, the normal voltage range M2, and the charging voltage range M3 correspond to the normal voltage range C1, and the over-voltage range M4 corresponds to the over-charging range C2.

That is, the entire ranges M1 to M4 of the voltage generated from the vehicle are covered by the operation voltage ranges C0 to C2 of the lithium-ion battery cell.

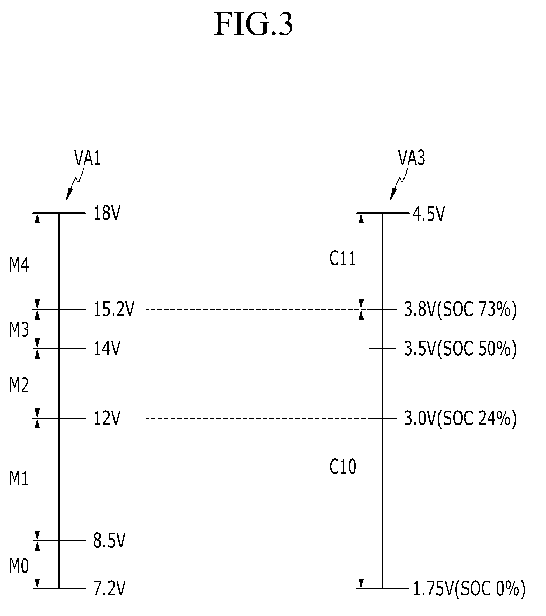

FIG. 3 shows an operation voltage range of a lithium-ion battery cell and a voltage range generated from a vehicle according to an exemplary embodiment of the present invention.

In FIG. 3, the operation voltage range is an operation voltage range of a lithium-ion battery cell using a negative electrode formed of amorphous carbon and an LFP-based positive electrode.

Then operation voltage range of the lithium-ion battery cell shown in FIG. 3 is also a voltage range in a case that the lithium-ion battery cell is formed of four lithium-ion battery cells connected in series. Since VA1 is the same as the previously described exemplary embodiment, an operation voltage range VA3 of the lithium-ion battery cell using the LFP-based positive electrode and correspondence between VA1 and VA3 will be described. The number of battery cells can differ from four battery cells depending on the voltage VA1

VA3 includes two conditions, and the entire range from 1.75V to 4.5V is classified depending on the two conditions.

A normal range C10 is from 1.75V to 3.8V, and is a range from SOC 0% to SOC 100%.

An overcharge range C11 is from 3.8V to 4.5V, and is a range exceeding SOC 100%.

In FIG. 3, each range of VA1 corresponds to VA3. The VA1 and the VA3 shown in FIG. 3 correspond to each other only in a condition that the four lithium-ion battery cells are connected in series. Since the lithium-ion battery pack 100 is formed of the four cells connected in series, a value obtained by dividing the respective voltages of VA1 by 4 becomes a voltage corresponds to one lithium-ion battery cell. The number of battery cells can differ from four battery cells depending on the voltage VA1

First, a cold cranking range M0, a cranking range M1, a normal voltage range M2, and a charging voltage range M3 correspond to a normal range C10, and an over-voltage range M4 corresponds to an over-voltage range C11.

That is, the entire ranges M0 to M4 of the voltages generated from the vehicle are covered by operation voltage ranges C10 to C11 of the lithium-ion battery cell.

The voltage range generated from the vehicle and the voltage range of the lithium-ion battery cell, described with reference to FIG. 2 and FIG. 3 are examples provided for description of the exemplary embodiment of the present invention, and the present invention is not limited thereto. When amorphous carbon is used as the lithium-ion battery cell, an enhanced range may be decreased to be lower than 2V. A voltage of the cold cranking range is supplied by the lithium-ion battery cell. However, it is difficult to decrease an enhance range of a battery cell including a negative electrode formed by using typical graphite to be lower than 2V. Therefore, the battery cell including the negative electrode using graphite cannot supply a voltage of the cranking range.

As described, the operation voltage range of the lithium-ion battery cell according to the exemplary embodiment of the present invention can cover the entire voltage ranges generated from the vehicle.

The operation voltage characteristic of the lithium-ion battery cell according to the exemplary embodiment of the present invention may be set as described with reference to FIG. 2 and FIG. 3 by manufacturing the negative electrode of the lithium-ion battery cell using amorphous carbon.

Hereinafter, the structure of the lithium-ion battery cell according to the exemplary embodiment of the present invention will be described in further detail.

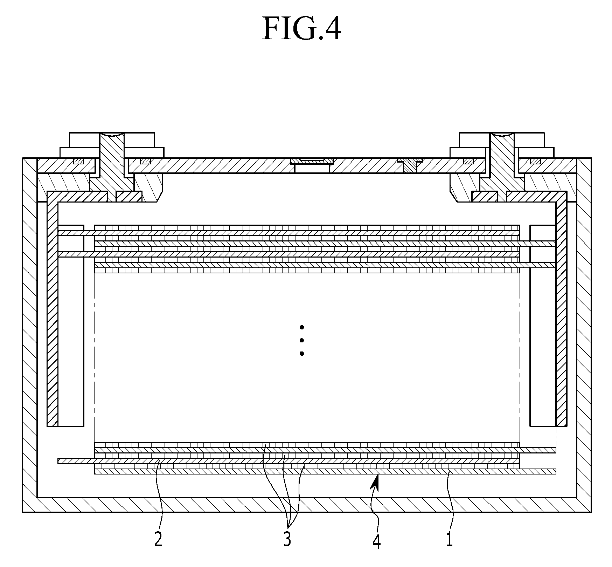

FIG. 4 is an exploded perspective view of the lithium-ion battery according to the exemplary embodiment of the present invention. The lithium-ion battery is exemplarily formed in the shape of a prism, but the present invention is not limited thereto. The exemplary embodiment of the present invention may be applied to various shapes of batteries such as a lithium polymer battery, a cylindrical battery, and the like.

Referring to FIG. 4, the lithium-ion battery may include an electrode assembly 4 formed by spirally winding a positive electrode 1 and a negative electrode 2, interposing a separator 3 therebetween and a case 5 in which the electrode assembly 4 is installed. The positive electrode 1, the negative electrode 2, and the separator 3 may be impregnated in an electrolyte solution (not shown).

The negative electrode 2 includes a current collector and a negative electrode active material layer formed on the current collector, and the negative electrode active material layer includes a negative electrode active material.

The negative electrode active material includes a material that can reversibly perform intercalation/deintercalation on lithium ion.

In further detail, the negative electrode active material includes a carbon-based material of which interlayer spacing (d₀₀₂) of a (002) plane is 0.34nm to 0.50nm in X-ray diffraction measurement using the Cu-Kα line. The term "002" relates to miller indices known in the art.

The interlayer spacing d₀₀₂ may be 0.34nm to 0.45nm, 0.34nm to 0.40nm, 0.34nm to 0.37nm, and 0.34nm to 0.36nm. When the interlayer spacing satisfies the range, lithium ion can be easily inserted and separated with ease, thereby realizing excellent high-rate charging/discharging characteristic. On the contrary, in case of an interlayer spacing d₀₀₂ of less than about 0.34nm, lithium ion cannot be easily inserted or separated so that the high-rate charging/discharging characteristic is deteriorated.

The carbon-based material may be amorphous carbon. Unlike graphite, amorphous carbon has a limit in insertion and separation paths of lithium ion and electrode expansion is not easy so that a high-output characteristic can be realized and, and has a long life span. In particular, the amorphous carbon may have high reversible capacity in heat treatment at lower than 800°C.

Soft carbon (As an example of the amorphous carbon) or hard carbon, mesophase pitch-based carbide, calcined cokes may be examples of the amorphous carbon.

For example, the carbon-based material may be soft carbon. As a graphitizing carbon, the soft carbon is that the automatic arrangement can easily form a layered structure so that the soft carbon can be easily changed to a graphite structure according to an increase of a heat treatment temperature. Since the soft carbon has disordered crystal compared to the graphite, the soft carbon includes many gates that help entry and exit of ion and ion can be easily dispersed since the disorder degree of crystal is low compared to the hard carbon. As a detailed example, the carbon-based material may be a soft carbon having low crystallinity.

An average diameter D50 of the carbon-based material may be 1µm to 50µm. In further detail, the average diameter D50 may be 1 to 40µm, 1 to 30µm, 1 to 20µm, 5 to 50µm, 10 to 50µm, 5 to 15µm, or 6 to 12µm. In this case, a suitable amount of pores exists in a negative electrode composition and accordingly, activation sites that function as a path or a storage of lithium ion, connecting crystalline portions are substantially generated so that fast storing characteristic and cold temperature high-output can be achieved and contact resistance can be reduced.

Here, D50 implies a particle size at a volume ratio of 50% in a cumulative size-distribution curve.

The carbon-based material may be formed in various shapes such as a sphere, a plate, a flack, a fiber, and the like, or, for example, may be formed in the shape of a needle.

The carbon-based material may have a specific surface area of from 0.1 to 20 m²/g, or may be from 0.1 to 10 m²/g, from 1 to 20 m²/g, from 1 to 10 m²/g, or from 1 to 5 m²/g measured by the BET method (Brunauer-Emmett-Teller). The carbon-based material having the specific surface area of the above-stated range may be used as the negative electrode active material. In this case, a carbon-based material having low crystallinity can be acquired, and accordingly an excellent high-rate characteristic and a life-span characteristic at high-rate can be achieved.

A tap density of the carbon-based material may be from 0.30 to 10.00 g/cm³, and in further detail, the tap density may be from 0.60 to 10.00 g/cm³, from 0.30 to 5.00 g/cm³, or from 0.60 to 5.00 g/cm³. When the carbon-based material having the tab density of the above-stated range, a carbon-based material having low crystallinity can be acquired and accordingly, an excellent high-rate characteristic and a high-rate cycle-life characteristic can be achieved.

The negative active material layer may further include a binder.

The binder makes the negative electrode active material particles attached to each other and attaches the negative electrode active material to the current collector, and as the binder, polyvinyl alcohol, carboxymethyl cellulose, hydroxypropylcellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene butadiene rubber, acrylated styrene-butadiene rubber, an epoxy resin, nylon, and the like may be used, but it is not restrictive.

In addition, the negative electrode active material layer may further include a conductive material.

The conductive material is used to provide conductivity to an electrode, and any electronic conductive material that does not cause a chemical change in a battery can be used. For example, a carbon-based material such as natural graphite, artificial graphite, carbon black, acetylene black, ketjen black, carbon fiber, and the like, a metal powder such as copper, nickel, aluminum, silver, and the like, or a metal-based material such as metal fiber and the like, a conductive polymer such as a polyphenylene conductor and the like, or a conductive material including a mixture thereof may be used.

As the current collector, a copper film, a nickel film, a stainless steel film, a titanium film, a nickel form, a copper foam, a polymer material coated with a conductive metal or a combination thereof may be used.

The positive electrode 1 includes a current collector and a positive electrode active material layer formed in the current collector, and the positive electrode active material layer includes a positive electrode active material.

As the positive electrode active material, any compound (lithiated intercalation compound) that can perform reversible intercalation and deintercalation on lithium may be used.

In further detail, the positive electrode active material may include a lithium-nickel-based oxide, a lithium-cobalt-based oxide, a lithium-nickel-manganese-based oxide, a lithium-nickel-cobalt-manganese-based oxide, a lithium-nickel-cobalt-aluminum-based oxide, a lithium-phosphate-based oxide, or a combination thereof. For an example, the positive electrode active material may be the lithium-nickel-cobalt-manganese-based oxide or the lithium-phosphate-based oxide.

That is, as the positive electrode active material, one or more of cobalt, manganese, nickel, or a complex oxide of a method of combination thereof and lithium may be used, and in further detail, a compound that can be expressed by one of the following chemical formulas may be used.
LiₐA_{1-b}R_{b}D₂ (here, 0.90 ≤ a ≤ 1.8 and 0 ≤ b ≤ 0.5); LiₐE_{1-b}R_{b}O_{2-c}D_{c} (here, 0.90 ≤ a ≤ 1.8, 0 ≤ b ≤ 0.5 and 0 ≤ c ≤ 0.05); LiE_{2-b}R_{b}O_{4-c}D_{c} (here, 0 ≤ b ≤ 0.5, 0 ≤ c ≤ 0.05); LiₐNi_{1-b-c}Co_{b}R_{c}D_{α} (here, 0.90 ≤ a ≤ 1.8, 0 ≤ b ≤ 0.5, 0 ≤ c ≤ 0.05 and 0 < α ≤ 2); LiₐNi_{1-b-c}Co_{b}R_{c}O_{2-α}Z_{α} (here, 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂ (here, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (here, 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α} (here, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (here, 0.90 ≤ a ≤ 1.8, 0 ≤ b ≤ 0.5, 0 ≤ c ≤ 0.05 and 0 < α < 2); LiₐNi_{b}E_{c}G_{d}O₂ (here, 0.90 ≤ a ≤ 1.8, 0 ≤ b ≤ 0.9, 0 ≤ c ≤ 0.5 and 0.001 ≤ d ≤ 0.1.); LiₐNi_{b}Co_{c}Mn_{d}GeO₂ (here, 0.90 ≤ a ≤ 1.8, 0 ≤ b ≤ 0.9, 0 ≤ c ≤ 0.5, 0 ≤ d ≤0.5 and 0.001 ≤ e ≤ 0.1.); LiₐNiG_{b}O₂ (here, 0.90 ≤ a ≤ 1.8 and 0.001 ≤ b ≤ 0.1.); LiₐCoG_{b}O₂ (here, 0.90 ≤ a ≤ 1.8 and 0.001 ≤ b ≤ 0.1.); LiₐMnG_{b}O₂ (here, 0.90 ≤ a ≤ 1.8 and 0.001 ≤ b ≤ 0.1.); LiₐMn₂G_{b}O₄ (here, 0.90 ≤ a ≤ 1.8 and 0.001 ≤ b ≤ 0.1.); QO₂;QS₂;LiQS₂;V₂O₅;LiV₂O₅;LiTO₂;LiNiVO₄;Li_{(3-f)}J₂ PO₄₃ (0 ≤ f ≤ 2); Li_{(3-f)}Fe₂ PO₄₃ (0 ≤ f ≤ 2); and LiFePO₄.

In the chemical formulas, A denotes Ni, Co, Mn, or combination thereof; R denotes Al, Ni, Co, Mn, Cr, Fe, Mg, Sr, V, a rare earth element, or combination thereof; D denotes O, F, S, P, or combination thereof, E denotes Co, Mn, or combination thereof; Z denotes F, S, P, or combination thereof, G denotes Al, Cr, Mn, Fe, Mg, La, Ce, Sr, V, or combination thereof, Q denotes Ti, Mo, Mn, or combination thereof, T denotes Cr, V, Fe, Sc, Y, or combination thereof, and J denotes V, Cr, Mn, Co, Ni, Cu, or combination thereof.

A compound having a coating layer in the surface thereof may be used, or the above-stated compound and a compound having a coating layer may be mixed. The coating layer is a coating element compound, and may include a coating-element oxide, hydroxide, a coating-element oxyhydroxide, a coating-element oxycarbonate, or a coating-element hydroxycarbonade

A compound forming the coating layers may be amorphous or crystalline.

As a coating element included in the coating layer, Mg, Al, Co, K, Na, Ca, Si, Ti, V, Sn, Ge, Ga, B, As, Zr, or a mixture thereof may be used. The coating layer may be formed using any coating method (e.g., spray coating, that does not badly influence a positive electrode active material using the above-stated elements to the compound (e.g., spray coating, dipping, and the like), and since the method is well known to a person skilled in the art, no further description will be provided.

The positive electrode active material may further include a carbon material. Particularly, the positive electrode active material may further include a carbon material having a surface area of 500m²/g to 2500m²/g. In this case, a high input-output characteristic of the high-capacity lithium secondary battery can be easily maintained.

The surface area of the carbon material may be 1000 to 2500 m²/g, and in further detail, may be 1200 to 2000 m²/g. When the surface area of the carbon material is included such a range, an activation site of the positive electrode active material is increased and thus high input output can be simply achieved, and accordingly, excellent high-rate cycle-life of the lithium secondary battery can be acquired.

As an example, the carbon may be activated carbon.

With respect to the total amount of the positive electrode active material, the carbon material is included with 1 to 20 wt%, in further detail, with 0.1 to 10 wt%, 1 to 12 wt%, 1 to 10 wt%, 3 to 12 wt%, or 3 to 10 wt%. In this case, the high input output characteristic can be further effectively maintained.

A benzene absorption amount of the carbon material may be 38 to 85 wt%, in further detail, may be 40 to 75 wt%. The absorption amount may be significantly changed depending on a structure of an internal pore and distribution of the carbon material. When the carbon material having the above-stated range of benzene absorption amount is included in the positive electrode active material, a pore that may function as a path or storage for lithium ion has the optimum volume. Accordingly, a high-rate cycle-life characteristic, an excellent high-rate characteristic, and a storage maintenance characteristic can be acquired.

The positive electrode active material layer may further include a binder and/or a conductive material.

The binder makes the negative electrode active material particles attached to each other and attaches the positive electrode active material to the current collector. As an example of the binder, polyvinyl alcohol, carboxymethyl cellulose, hydroxypropylcellulose, diacetyle cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene butadiene rubber, acryl acrylated styrene-butadiene rubber, an epoxy resin, nylon, and the like, but it is not limited thereto.

The conductive material is used to provide conductivity to an electrode, and any electronic conductive material that does not cause a chemical change in a battery can be used. For example, a carbon-based material such as natural graphite, artificial graphite, carbon black, acetylene black, ketjen black, carbon fiber, and the like, a metal powder such as copper, nickel, aluminum, silver, and the like, or a metal-based material such as metal fiber and the like, or one of conductive materials such as a polyphenylene conductor and the like or a mixture of more than one conductive material may be used.

As the current collector, Al may be used, but it is not restrictive.

For manufacturing the positive electrode and the negative electrode, the active material, the binder, and the conductive material are mixed in a solvent to manufacture an active material composition and the composition is coated to the current collector such that the positive electrode and the negative electrode are respectively manufactured. Such a manufacturing method is well known to a person skilled in the art, and therefore no further detailed description will be provided. As the solvent, N-methylpyrrolidone may be used, but it is not restrictive.

The electrolyte includes a non-aqueous organic solvent and lithium salt.

The non-aqueous organic solvent functions as a medium through which ions participated in an electrochemical reaction or a battery can move.

As the non-aqueous organic solvent, a carbonate-based solvent, an ester-based solvent, an ether-based solvent, a ketone-based solvent, an alcohol-based solvent, or an aprotic solvent may be used. As the carbonate-based solvent, dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like may be used, and as the ester-based solvent, methyl acetate, ethyl acetate, n-propyl acetate, 1,1-dimethylethyl acetate, methyl propionate, ethyle propionate, γ-butyrolactone, decanolide, valerolactone, mevalonolacton, caprolactone, and the like may be used. As the ether-based solvent, dibutyl ether, tetraglyme, diglyme, dimethoxyethane, 2-methyltetrahydrofuran, tetrahydrofuran, and the like may be used, and cyclohexanone may be used as the ketone-based solvent. In addition, as the alcohol-based solvent, ethyl alcohol, isopropyl alcohol, and the like may be used, and nitriles such as R-CN (R denotes a linear, branched, or ring structured hydrocarbon group of C2 to C20, and may include a double-bonded aromatic ring or an ether bond) and the like, amides such as dimethylformamide and the like, dioxolanes such as 1,3-dioxolane and the like, and sulfolanes may be used as the aprotic solvent.

The non-aqueous organic solvent may be solely used or one or more may be mixed for use. When one or more are mixed, a mixing ratio can be appropriately controlled for a desired battery performance, and this can be readily understood by persons skilled in the art.

In addition, in case of the carbonate-based solvent, it is preferred to mix cyclic-type carbonate and chain-type carbonate. In this case, the electrolyte solution may have excellent performance if the cyclic-type carbonate and the chain-type carbonate are mixed with a volume ratio of about 1:1 to about 1:9.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed with a volume ratio of about 1:1 to about 30:1.

As the aromatic hydrocarbon-based organic solvent, benzene, fluoro benzene, 1,2-difluoro benzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzenen, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-tridifluorotoluene, 1,2,4-tridifluorotoluene, chlorotoluene, 1,2-dichlorotoluene, 1,3-dichlorotoluene, 1,4- dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triidotolune, 1,2,4-triidotolune, xylene, or a combination thereof may be used.

In order to improve battery cycle-life, the non-aqueous electrolyte may further include vinylene carbonate or ethylene carbonate-based compound.

The ethylene carbonate-based compound may exemplarily include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, vinylene ethylene carbonate, and the like. When the vinylene carbonate or the ethylene carbonate is further used, the cycle-life can be improved by appropriately controlling the use amount.

The lithium salt is dissolved to the non-aqueous organic solvent and enables an basic operation of the lithium-ion rechargeable battery by acting as a supply source of lithium ion in the battery, and accelerates movement of the lithium ion between the positive electrode and the negative electrode. The lithium salt exemplarily includes LiPF₆, LiBF₄, LiSbF₆, LiAsF₆, LiC₄F₉SO₃, LiClO₄, LiAlO₂, LiAlCl₄, LiN (CₓF₂ₓ₊₁SO₂, C_{y}F_{2y+1}SO₂, here, x and y are natural numbers), LiCl, Lil, LiB C₂O₄₂ (lithium bis(oxalato) borate; LiBOB) or a combination thereof, and they are included as supporting electrolytic soda. The concentration of the lithium salt is preferably included in a range from 0.1 to 2.0M. When the concentration of the lithium salt is included in the range, the electrolyte may have a proper conductivity and viscosity so that excellent electrolyte performance can be achieved and lithium ion can be effectively moved.

The separator separates the negative electrode and the positive electrode and provides a movement path for the lithium ion, and any type of typical separator used in the lithium battery may be used. That is, a separator having low resistance and excellent humidification ability with respect to the ion mobility of the electrolyte may be used. For example, the separator may be selected from glass fiber, polyester, teflon, polyethylene, polypropylene, polytetrafluoroethylene (PTFE) or a combination thereof, and may be a non-woven fabric or a woven fabric. For example, in the lithium ion battery, a polyolefin-based polymer separator such as polyethylene, polypropylene, and the like is mainly used, a coated separator including a ceramic component or a polymer material is included for acquiring heat resistance and mechanical strength may be used, and a single-layered or multi-layered structure may be selectively used.

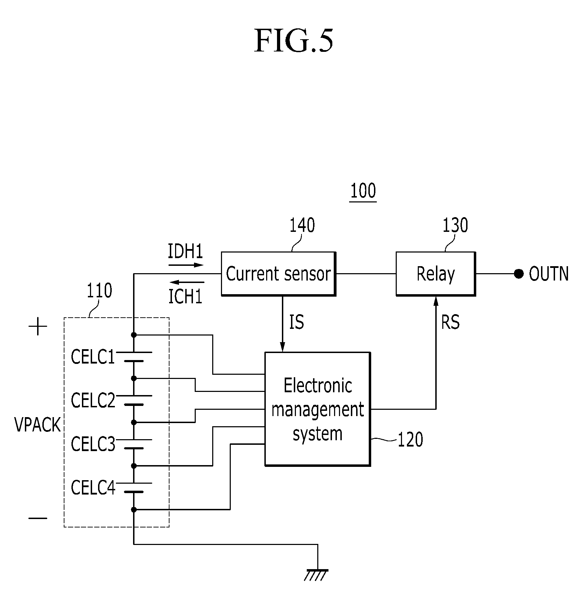

Hereinafter, a structure of a lithium-ion battery pack according to an exemplary embodiment of the present invention will be described with reference to FIG. 5.

FIG. 5 shows a structure of a lithium-ion battery pack according to an exemplary embodiment of the present invention.

As shown in FIG. 5, a lithium-ion battery pack 100 includes a lithium-ion battery 110, a battery management system 120, a relay 130, and a current sensor 140.

The lithium-ion battery 110 includes four lithium-ion battery cells CELL1 to CELL4 connected in series. The number of lithium-ion battery cells may be appropriately determined according to a voltage range generated from a vehicle.

The current sensor 140 measures a discharge current IDH1 supplied from the lithium-ion battery 110 and a charging current ICH1 flowing to the lithium-ion battery 110. The current sensor 140 generates current information on the measured current and transmits the current information to the battery management system 120.

The battery management system 120 is connected to a positive electrode and a negative electrode of each of the four lithium-ion battery cells CELL1 to CELL4 to measure a plurality of cell voltages VC1 to VC4 and a pack voltage VPACK, receive the current information IS, and measure cell temperatures CT1 to CT4 of the respectively lithium-ion battery cells CELL1 to CELL4.

The battery management system 120 controls a cell balancing operation based on the measured cell voltages VC1 to VC4. The battery management system 120 determines whether an over-voltage occurs based on the measured pack voltage VPACK. Also, the battery management system 120 may calculate SOC of the lithium-ion battery 110 using the pack voltage VPACK and the current information IS. The battery management system 120 may use at least one of the plurality of cell temperatures CT1 to CT4 for SOC calculation.

The relay 130 is connected between an output node OUTN and the lithium-ion battery 110. The relay 130 is turned on in a normal state, and when the battery management system 120 senses an abnormal state, the relay 130 is turned off.

For example, the abnormal state includes a state in which the pack voltage VPACK is an over-voltage, a specific cell voltage among the cell VC1 to VC4 is an over-voltage or an under-voltage, or at least one of the cell temperatures CT1 to CT4 exceeds a predetermined threshold.

When sensing the abnormal state, the battery management system 120 transmits a reset signal RS to turn off the relay 130.

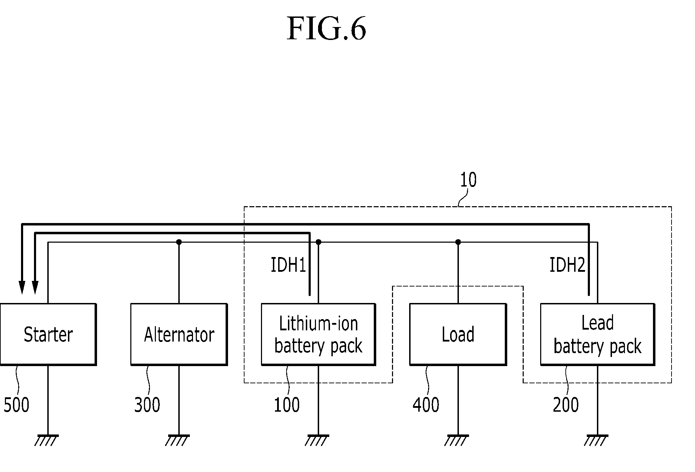

Hereinafter, an operation of a multi battery pack according to a vehicle running state will be described with reference to FIG. 6 to FIG. 9.

FIG. 6 shows a current flow of the multi battery pack in cranking operation of the vehicle.

As shown in FIG. 6, a current for a cranking operation is supplied from the multi battery pack 10. In further detail, a discharge current IDH1 and a discharge current IDH2 are respectively supplied from the lithium-ion battery pack 100 and a lead battery pack 200 to a starter 500. The starter 500 receives power for the cranking operation from the lithium-ion battery pack 100 and the lead battery pack 200.

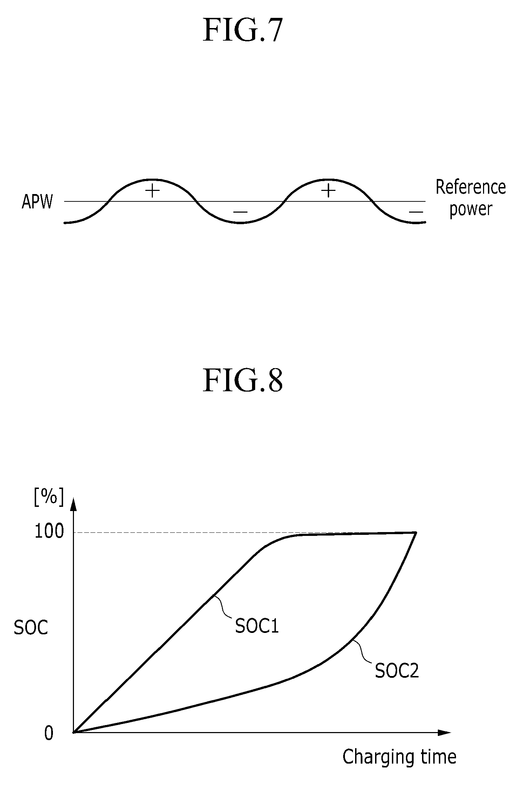

FIG. 7 shows an example of output power of an alternator, generated from a traveling vehicle.

As shown in FIG. 7, an output waveform of an alternator 300 is fluctuated with reference to predetermined reference power.

In FIG. 7, the area (+) is an area where output power APW of the alternator 300 is higher than the reference power and the area (-) is an area where the output power APW of the alternator 300 is lower than the reference power.

In the area (+), the output power APW of the alternator 300 is supplied to the load 400. Among the output power APW of the alternator 300, power other than the power required for the load 400 is supplied to the multi battery pack 10 such that the multi battery pack 10 is charged.

FIG. 8 is a graph illustrating charging characteristics of the lithium-ion battery pack and the lead battery pack according to the exemplary embodiment of the present invention.

FIG. 8 illustrates a charging curve SOC1 of the lithium-ion battery pack 100 and a charging curve SOC2 of the lead battery pack 200 according to the lapse of charging time in the same charging condition. In FIG. 8, the lithium-ion battery pack 100 is an LFP-based lithium-ion battery pack.

The lithium-ion battery pack 100 has low capacity compared to the lead battery pack 200 so that the lithium-ion battery pack 100 can be charged faster than the lead battery pack 200. Also, a wiring length between the lithium-ion battery pack 100 and the alternator 300 is shorter than a wiring length between the lead battery pack 200 and the alternator 300. Then, the charging speed of the lithium-ion battery pack 100 becomes faster than that of the lead battery pack 200 due to a difference in wiring resistance. As shown in FIG. 8, a rising slope of the charging curve SOC1 is steeper than a rising slope of the charging curve SOC2.

Referring back to FIG. 7, when the multi battery pack 10 is charged by the output power APW of the alternator 300, lithium-ion battery pack 100 is charged first than the lead battery pack 200. When the charging by the output power APW is continued after the lithium-ion battery pack 100 is fully charged, a charging operation of the lead battery pack 200 may be continued.

In the area (-), the power required for the load 400 is supplied from the multi battery pack 10. The power is supplied to the load 400 from the lithium-ion battery pack 100 among the multi battery pack 10.

When the vehicle stops traveling and thus being parked, power consumption occurs even though no operation occurs in the alternator 300. For example, power may be consumed by a parasitic current or electronic equipment mounted to the vehicle. Here, the electronic equipment is driven even though the vehicle is parked.

When the vehicle is parked, the multi battery pack 10 supplies power to the vehicle.

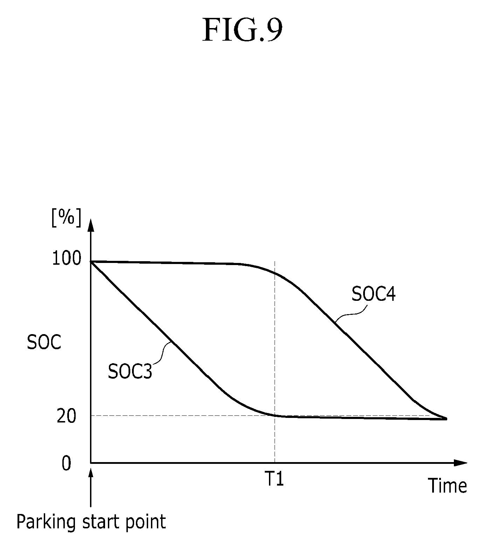

FIG. 9 is a graph illustrating discharging characteristics of the lithium-ion battery pack and the lead battery pack according to the exemplary embodiment of the present invention.

In FIG. 9, the lithium-ion battery pack 100 and the lead battery pack 200 are fully charged at a parking start time.

As shown in FIG. 9, a falling slope of a discharging curve SOC3 of the lithium-ion battery pack 100 is steeper than a falling slope of a discharging curve SOC4 of the lead battery pack 200 from the parking start time. During a period from the parking start time to a time T1 at which the discharging curve SOC3 is decreased to SOC 20%, the discharging curve SOC4 is gradually decreased. After the time T1, the falling slope of the discharging curve SOC4 becomes steeper.

That is, power required for the vehicle during the period from the parking start time to the time T1 is supplied from the lithium-ion battery pack 100, and power required for the vehicle after the time T1 is supplied from the lead battery pack 200.

As described, the multi battery pack 10 according to the exemplary embodiment of the present invention can be charged by the alternator 300 and supply power to the load 400 without having an additional power conversion means or a power control means.

This is because the capacity of the lithium-ion battery pack 100 is relatively lower than that of the lead battery pack 200 and a current path between the lithium-ion battery pack 100 and the alternator 300 is shorter than a current path between lead battery pack 200 and the alternator 300.

Further, the above-stated effect also can be provided from material properties of the positive electrode and the negative electrode of the lithium-ion battery cell.

## Claims

1. A battery system comprising:
a first battery pack (100) comprising a plurality of first battery cells being lithium-ion battery cells and having a positive electrode (1) and a negative electrode (2),
a second battery pack (200) having a larger capacity than the first battery pack (100) and being a different type of battery pack than the first battery pack (100), wherein
the first and second battery packs (100, 200) are connected in parallel with an alternator (300) for charging and discharging of the first and second battery packs (100, 200),
**characterized in that**
the negative electrode (2) of each of the lithium-ion battery cells comprises a carbon-based material excluding graphite and having an interlayer spacing (d₀₀₂) along a plane labeled by the miller indices (002) in the range of 0.34 nm to 0.5 nm in X-ray measurements using Cu-K_{α} line, wherein the operation voltage range of each of the first battery cells comprises an enhanced voltage range below 2V for cranking of a vehicle at a cold temperature.

2. The battery system of claim 1, wherein the second battery pack (200) has a larger internal resistance than the first battery pack (100), and/or is a lead battery pack.

3. The battery system of one of the previous claims, wherein the carbon-based material is a graphitizing carbon, soft carbon, hard carbon, mesophase pitch-based carbide, or calcined cokes.

4. The battery system of one of the previous claims, wherein the interlayer spacing of the carbon-based material ranges from 0.34 nm to 0.45 nm, preferably 0.34 to 0.37 nm.

5. The battery system of one of the previous claims, wherein the average diameter D50 of the carbon-based material ranges from 1 µm to 50 µm, preferably 1 µm to 30 µm, more preferably 5 µm to 15 µm.

6. The battery system of one of the previous claims, wherein the carbon-based material has a specific surface area of 0.1 to 20 m²/g, preferably 1 to 10 m²/g, even more preferably 1 to 5 m²/g measured by the Brunauer-Emmett-Teller method.

7. The battery system of one of the previous claims, wherein the tap density of the carbon-based material ranges from 0.3 to 10 g/cm³, preferably from 0.6 to 5 g/cm³.

8. The battery system of one of the previous claims, wherein a length of an electronic path from the first battery pack (100) to the alternator (300) is shorter than the length of the electronic path from the second battery pack (200) to the alternator (300).

9. The battery system of any of the previous claims, wherein the positive electrode (1) of each of the first battery cells comprises a nickel-based positive electrode active material.

10. The battery system of claim 9, wherein an operation voltage range of each of the first battery cells comprises:
a first enhanced range including 1.5V to 2V;
a first normal range including 2.0V to 4.2V; and
a first over-charging range including 4.2V to 4.5V.

11. The battery system of any of claims 1 to 8, wherein the positive electrode (1) of each of the first battery cells comprises a lithium-phosphate-based positive electrode active material.

12. The battery system of claim 11, wherein an operation voltage range of the first battery cell comprises:
a second normal range including 1.75V to 3.8V; and
a second over-charging range including 3.8V to 4.5V.

13. A vehicle comprising a battery system according to one of claims 1 to 12, wherein the alternator (300) is configured to generate power to the battery system.

14. An operation method of a vehicle, the vehicle comprising a battery system of one of claims 1 to 12, the method comprising the step of:
charging the battery system via a direct electric connection from the alternator (300) to the first and the second battery pack (100, 200), respectively, wherein the first battery pack (100) and second battery pack (100, 200) are charged in parallel and the first battery pack (100) is charged faster than the second battery pack (200).

## Patentansprüche

1. Ein Batteriesystem, aufweisend:
einen ersten Batteriepack (100), der eine Vielzahl erster Batteriezellen, die Lithiumionen-Batteriezellen sind und eine positive Elektrode (1) und eine negative Elektrode (2) aufweisen, aufweist,
einen zweiten Batteriepack (200), der eine größere Kapazität als der erste Batteriepack (100) aufweist und von einem anderen Batteriepacktyp als der der erste Batteriepack (100) ist, wobei
der erste und zweite Batteriepack (100, 200) mit einem Generator (300) zum Laden und Entladen des ersten und zweiten Batteriepacks (100, 200) parallel geschaltet sind,
**dadurch gekennzeichnet, dass**
die negative Elektrode (2) jeder der Lithiumionen-Batteriezellen ein Material auf Kohlenstoffbasis mit Ausnahme von Graphit aufweist, das einen Zwischenschichtabstand (d₀₀₂) entlang einer Ebene, die durch die Millerschen Indizes (002) bezeichnet wird, im Bereich von 0,34 nm bis 0,5 nm in Röntgenmessungen unter Verwendung der Cu-K_{α}-Linie aufweist, wobei der Betriebsspannungsbereich jeder der ersten Batteriezellen einen vergrößerten Spannungsbereich unter 2V zum Anlassen eines Fahrzeugs bei einer kalten Temperatur aufweist.

2. Das Batteriesystem nach Anspruch 1, wobei der zweite Batteriepack (200) einen größeren Innenwiderstand als der erste Batteriepack (100) aufweist und/oder ein Bleibatteriepack ist.

3. Das Batteriesystem eines der vorhergehenden Ansprüche, wobei das Material auf Kohlenstoffbasis graphitisierender Kohlenstoff, weicher Kohlenstoff, harter Kohlenstoff, auf Mesophasenpech basierendes Carbid oder kalzinierter Koks ist.

4. Das Batteriesystem eines der vorhergehenden Ansprüche, wobei der Zwischenschichtabstand des Materials auf Kohlenstoffbasis im Bereich von 0,34 nm bis 0,45 nm, vorzugsweise von 0,34 bis 0,37 nm liegt.

5. Das Batteriesystem eines der vorhergehenden Ansprüche, wobei der mittlere Durchmesser D50 des Materials auf Kohlenstoffbasis im Bereich von 1 µm bis 50 µm, vorzugsweise von 1 µm bis 30 µm, besonders bevorzugt von 5 µm bis 15 µm liegt.

6. Das Batteriesystem eines der vorhergehenden Ansprüche, wobei das Material auf Kohlenstoffbasis eine spezifische Oberfläche von 0,1 bis 20 m²/g, vorzugsweise von 1 bis 10 m²/g, besonders bevorzugt von 1 bis 5 m²/g, gemessen durch das Brunauer-Emmett-Teller-Verfahren, aufweist.

7. Das Batteriesystem eines der vorhergehenden Ansprüche, wobei die Klopfdichte des Materials auf Kohlenstoffbasis im Bereich von 0,3 bis 10 g/cm³, vorzugsweise von 0,6 bis 5 g/cm³ liegt.

8. Das Batteriesystem eines der vorhergehenden Ansprüche, wobei eine Länge eines elektronischen Weges vom ersten Batteriepack (100) zum Generator (300) kürzer ist als die Länge des elektronischen Weges vom zweiten Batteriepack (200) zum Generator (300).

9. Das Batteriesystem eines der vorhergehenden Ansprüche, wobei die positive Elektrode (1) jeder der ersten Batteriezellen ein positives aktives Elektrodenmaterial auf Nickelbasis aufweist.

10. Das Batteriesystem des Anspruchs 9, wobei ein Betriebsspannungsbereich jeder der ersten Batteriezellen aufweist:
einen ersten vergrößerten Bereich, der 1,5V bis 2V umfasst;
einen ersten Normalbereich, der 2,0V bis 4,2V umfasst; und
einen ersten Überladebereich, der 4,2V bis 4,5V umfasst.

11. Das Batteriesystem eines der Ansprüche 1 bis 8, wobei die positive Elektrode (1) jeder der ersten Batteriezellen ein positives aktives Elektrodenmaterial auf Lithium-Phosphat-Basis aufweist.

12. Das Batteriesystem des Anspruchs 11, wobei ein Betriebsspannungsbereich der ersten Batteriezelle aufweist:
einen zweiten Normalbereich, der 1,75V bis 3,8V umfasst; und
einen zweiten Überladebereich, der 3,8V bis 4,5V umfasst.

13. Ein Fahrzeug, aufweisend ein Batteriesystem nach einem der Ansprüche 1 bis 12, wobei der Generator (300) konfiguriert ist, um Energie für das Batteriesystem zu erzeugen.

14. Ein Betriebsverfahren zum Betreiben eines Fahrzeugs, wobei das Fahrzeug ein Batteriesystem nach einem der Ansprüche 1 bis 12 aufweist, wobei das Verfahren den folgenden Schritt aufweist:
Laden des Batteriesystems über eine direkte elektrische Verbindung vom Generator (300) jeweils zum ersten und zweiten Batteriepack (100, 200), wobei der erste Batteriepack (100) und zweite Batteriepack (100, 200) parallel geladen werden und der erste Batteriepack (100) schneller als der zweite Batteriepack (200) geladen wird.

## Revendications

1. Système de batterie comprenant :
un premier bloc de batteries (100) comprenant une pluralité de premiers éléments de batterie qui sont des éléments de batterie au lithium-ion et ayant une électrode positive (1) et une électrode négative (2),
un second bloc de batteries (200) ayant une capacité supérieure à celle du premier bloc de batteries (100) et qui est un type de bloc de batteries différent de celui du premier bloc de batteries (100), dans lequel
les premier et second blocs de batteries (100, 200) sont connectés en parallèle à un alternateur (300) pour charger et décharger les premier et second blocs de batteries (100, 200),
**caractérisé en ce que** l'électrode négative (2) de chacun des éléments de batterie au lithium-ion comprend un matériau à base de carbone à l'exclusion du graphite et ayant un espacement intercouche (d₀₀₂) le long d'un plan repéré par des indices de Miller (002) se situant dans la gamme de 0,34 nm à 0,5 nm lors de mesures par rayons X utilisant la raie Cu-K_{α}, dans lequel la gamme de tensions de fonctionnement de chacun des premiers éléments de batterie comprend une gamme de tensions améliorée inférieure à 2 V pour le démarrage d'un véhicule à froid.

2. Système de batterie selon la revendication 1, dans lequel le second bloc de batteries (200) présente une résistance interne supérieure à celle du premier bloc de batteries (100), et/ou est un bloc de batteries au plomb.

3. Système de batterie selon l'une quelconque des revendications précédentes, dans lequel le matériau à base de carbone est un carbone de graphitisation, un carbone mou, un carbone dur, un carbure à base de brai en mésophase, ou des cokes calcinés.

4. Système de batterie selon l'une quelconque des revendications précédentes, dans lequel l'espacement intercouche du matériau à base de carbone se situe dans la gamme de 0,34 nm à 0,45 nm, et de préférence de 0,34 à 0,37 nm.

5. Système de batterie selon l'une quelconque des revendications précédentes, dans lequel le diamètre moyen D50 du matériau à base de carbone se situe dans la gamme de 1 µm à 50 µm, et de préférence de 1 µm à 30 µm, et plus préférablement de 5 µm à 15 µm.

6. Système de batterie selon l'une quelconque des revendications précédentes, dans lequel le matériau à base de carbone présente une surface spécifique de 0,1 à 20 m²/g, et de préférence de 1 à 10 m²/g, et plus préférablement, de 1 à 5 m²/g, lorsqu'elle est mesurée par le procédé Brunauer-Emmett-Teller.

7. Système de batterie selon l'une quelconque des revendications précédentes, dans lequel la densité de débit du matériau à base de carbone se situe dans la gamme de 0,3 à 10 g/cm³, et de préférence de 0,6 à 5 g/cm³.

8. Système de batterie selon l'une quelconque des revendications précédentes, dans lequel une longueur d'un trajet électronique allant du premier bloc de batteries (100) à l'alternateur (300) est plus courte que la longueur du trajet électronique allant du second bloc de batteries (200) à l'alternateur (300).

9. Système de batterie selon l'une quelconque des revendications précédentes, dans lequel l'électrode positive (1) de chacun des premiers éléments de batterie comprend un matériau actif d'électrode positive à base de nickel.

10. Système de batterie selon la revendication 9, dans lequel une gamme de tensions de fonctionnement de chacun des premiers éléments de batterie comprend :
une première gamme améliorée allant de 1,5 V à 2 V ;
une première gamme normale allant de 2,0 V à 4,2 V ; et
une première gamme de surcharge allant de 4,2 V à 4,5 V.

11. Système de batterie selon l'une quelconque des revendications 1 à 8, dans lequel l'électrode positive (1) de chacun des premiers éléments de batterie comprend un matériau actif d'électrode positive à base de phosphate de lithium.

12. Système de batterie selon la revendication 11, dans lequel une gamme de tensions de fonctionnement du premier élément de batterie comprend :
une seconde gamme normale allant de 1,75 V à 3,8 V ; et
une seconde gamme de surcharge allant de 3,8 V à 4,5 V.

13. Véhicule comprenant un système de batterie selon l'une quelconque des revendications 1 à 12, dans lequel l'alternateur (300) est configuré pour générer de l'énergie destinée au système de batterie.

14. Procédé de mise en fonctionnement d'un véhicule, le véhicule comprenant un système de batterie selon l'une des revendications 1 à 12, le procédé comprenant l'étape consistant à :
charger le système de batterie par l'intermédiaire d'une connexion électrique directe de l'alternateur (300) aux premier et second blocs de batteries (100, 200), respectivement, dans lequel le premier bloc de batteries (100) et le second bloc de batteries (100, 200) sont chargés en parallèle et le premier bloc de batteries (100) est chargé plus rapidement que le second bloc de batteries (200).
